Europäisches Patentamt

European Patent Office

Office européen des brevets

(11) Veröffentlichungsnummer: **0 307 971 B1**

(12) **EUROPÄISCHE PATENTSCHRIFT**

(45) Veröffentlichungstag der Patentschrift: **18.12.91**

(21) Anmeldenummer: **88117883.4**

(22) Anmeldetag: **15.10.85**

(51) Int. Cl.⁵: **F16L 37/12**, F16L 37/08, F16L 33/23, B60K 15/00

(60) Veröffentlichungsnummer der früheren Anmeldung nach Art. 76 EPÜ: **0 178 626**

(54) **Kupplungsmuffe zum Verbinden von zwei Rohrleitungsenden.**

(30) Priorität: **18.10.84 DE 3438173**

(43) Veröffentlichungstag der Anmeldung:
**22.03.89 Patentblatt 89/12**

(45) Bekanntmachung des Hinweises auf die Patenterteilung:
**18.12.91 Patentblatt 91/51**

(84) Benannte Vertragsstaaten:
**DE FR GB IT**

(56) Entgegenhaltungen:
**DE-A- 2 734 117     DE-B- 2 050 754**
**FR-A- 2 217 627     FR-A- 2 522 388**
**US-A- 4 296 950     US-A- 4 451 069**

(73) Patentinhaber: **Vorschepoth, Heinrich**
**Mielenforster Heide 13**
**W-5000 Köln 80(DE)**

(72) Erfinder: **Vorschepoth, Heinrich**
**Mielenforster Heide 13**
**W-5000 Köln 80(DE)**
Erfinder: **Bowers, Rex**
**51, Nuneaton Road**
**Bulkinton(GB)**

(74) Vertreter: **Langmaack, Jürgen, Dipl.-Ing. et al**
**Patentanwälte Maxton . Maxton . Langmaack**
**Goltsteinstrasse 93,VII Postfach 51 08 06**
**W-5000 Köln 51(DE)**

Rank Xerox (UK) Business Services

**Beschreibung**

Die Erfindung betrifft eine Kupplungsmuffe zum Verbinden der Enden zweier Leitungen für strömende Medien, insbesondere für Kraftstoffleitungen an Verbrennungsmotoren, mit einem Muffenteil, das wenigstens eine Einschuböffnung zur Aufnahme eines Leitungsendes aufweist.

In einer Vielzahl von Einsatzfällen müssen bei Maschinen Nebenaggregate über Rohr- und/oder Schlauchleitungen miteinander verbunden werden. Hierbei ist vielfach auch die Notwendigkeit gegeben, daß eine starre Rohrleitung, beispielsweise aus Metall, mit einer biegsamen Schlauchleitung aus Gummi oder Kunststoff verbunden werden muß, wie dies beispielsweise für Kraftstoffleitungen an Verbrennungsmotoren üblich ist. Gerade im Fall der Verbrennungsmotoren, insbesondere bei der Automobil-Serienproduktion, kommt es vor allem darauf an, daß zum einen die Kupplungsmuffe leicht zu montieren ist, insbesondere durch eine einfache Steckmontage, andererseits die Muffenverbindung aber so fest ist, daß sie sich auch bei den starken Erschütterungen beim Betrieb eines Kraftfahrzeuges nicht lösen kann. Gleichwohl muß die Muffenverbindung so ausgebildet sein, daß zu Reparaturzwecken beide Leitungsteile voneinander gelöst werden können, wobei es wichtig ist, daß die Außenfläche der Leitungsenden, die gleichzeitig als Dichtenden dienen, durch die Muffenverbindung nicht beschädigt werden.

Aus der DE-A-2 734 117 ist eine Kupplungsmuffe bekannt, die einen mit einem außenliegenden O-Ring als Dichtelement versehenen Steckteil und einen Kupplungsteil aufweist, in den der Steckteil eingeschoben wird und der mit federnden Rasten versehen ist, die in eine Ausnehmung am Steckteil eingreifen und dieses gegen Herausziehen arretieren. Die federnden Rasten sind über Biegefedern einstückig mit einer Schiebehülse verbunden, die eine Entriegelung ermöglicht. Eine Schlauchkupplung dieser Bauart ist für Gartenschläuche geeignet, jedoch nicht als Kupplung für Kraftstoffleitungen an Kraftfahrzeugen, da die notwendige Spielfreiheit im Hinblick auf die im Betrieb vorhandenen Erschütterungen nicht gewährleistet ist und somit die Gefahr eines unbeabsichtigten Lösens und/oder ein Brechen von Einzelteilen besteht.

Aus der US-A-4 451 069 ist eine ähnliche Schlauchkupplung bekannt. Diese besteht aus einem mit einer Sicherungshülse versehenen und eine außenliegende Dichtung getragenden Steckteil und einem mit dem anderen Leitungsende zu verbindenden, mit freiliegenden Sicherungsfingern versehenen Muffenteil. Auch hier ist es nicht möglich, in den Muffenteil unmittelbar ein mit einer Wulst versehenes Leitungsende einzuschieben, sondern es muß vielmehr jeweils mit beiden Leitungsenden ein Steckteil bzw. ein Muffenteil verbunden werden. Ein Nachteil dieser Bauform besteht ferner darin, daß die Sicherung der Steckverbindung mit zurückgeschobener Sicherungshülse ungenügend ist, so daß eine Trennung schon bei geringen Axialkräften möglich ist. Die Abstützung der Kupplungsmuffen gegenüber Querkräften ist hierbei wegen der geringen Überdeckung gerade in der Betriebsstellung ungenügend.

Der Erfindung liegt nun die Aufgabe zugrunde, eine Muffenverbindung der eingangs bezeichneten Art zu schaffen, die die vorstehend aufgeführten Forderungen erfüllt.

Dies wird erfindungsgemäß dadurch gelöst, daß am Muffenteil im Bereich der Einschuböffnung wenigstens zwei quer zur Einschuböffnung auslenkbare Sicherungsfinger angeordnet sind, deren freie Enden jeweils mit radial nach innen gerichteten Ansätzen versehen sind, die auf die Außenwandung eines die Einschuböffnung bildenden rohrförmigen elastischen Dichtungskörpers einwirken, so daß eine auf dem Muffenteil axial verschiebbare und auf diesem einrastbare Sicherungshülse vorgesehen ist, die in ihrer Betriebsstellung die freien Enden der Sicherungsfinger im wesentlichen Spielfrei umgreift.

Eine derart ausgebildete Kupplungsmuffe weist eine Reihe von Vorteilen auf. Zur Montage kann das freie Ende der anzuschließenden Leitung, entweder ein Rohr oder aber auch ein Schlauch, mit einem Rohreinsatz im Endbereich in einfacher Steckmontage in die Einschuböffnung des Muffenteils eingeschoben werden, wobei der im Muffenteil vorhandene rohrförmige Dichtungskörper aus elastischem Material das engeschobene Leitungsende auf seiner Außenfläche dichtend umgreift. Überlicherweise weist hier die freie Öffnung des elastischen Dichtungskörpers einen etwas geringeren Durchmesser auf aus der Außendurchmesser des einzuschiebenden Leitungsendes, so daß bei eingeschobenem Leitungsende der Dichtkörper entsprechend verpreßt wird und die erforderliche Dichtkraft vorhanden ist. Da der rohrförmige Dichtungskörper im Gegensatz zu den bisher bekannten Kupplungen ein ausreichendes Verformungsvolumen aufweist, werden bei einer Belastung der Kupplungsmuffe durch Querkräfte zusätzliche Verformungen des elastischen Dichtungskörpers nicht zu einer Beeinträchtigung der Dichtkraft führen. Das eingeschobene Leitungsende ist über eine erhebliche Länge auf seiner Außenfläche vom Dichtungskörper dichtend umfaßt, wobei im Bereich der Ansätze der Sicherungsfinger durch die übergeschobene Sicherungshülse eine Anpreßkraft zwischen Dichtkörper und Leitungsende wirksam wird, die die Dichtwirkung verbessert. Obwohl der am Leitungsende angeordnete ringförmige Vorsprung nunmehr innerhalb des Dichtungskörpers liegt, ergibt sich gleichwohl eine formschlüssig wirkende Sicherung des Leitungsendes gegen ein Herausziehen durch die Ansätze der Sicherungsfinger.

Sieht man erfindungsgemäß an den Sicherungsfingern im Bereich der am Dichtungskörper anliegenden Ansätze auf der Außenseite Vorsprünge vor, die im Zusammenwirken mit der Sicherungshülse eine die Betriebsstellung definierende Rast bilden, so läßt sich bei entsprechender Formgebung der Vorsprünge sowohl eine Sicherung der Betriebsstellung als auch die gewünschte Erhöhung der Dichtwirkung erreichen, die sich auch durch auf die Leitung wirkende Querkräfte nicht mindert.

Während es grundsätzlich möglich ist, das Muffenteil mit den Sicherungsfingern einstückig herzustellen, was insbesondere dann angezeigt ist, wenn elastische Dichtungskörper als gesondertes Bauteil unter Vorspannung in die Einschuböffnung eingesetzt werden, ist in einer bevorzugten Ausgestaltung der Erfindung vorgesehen, daß die Sicherungsfinger mit ihrem festen Ende an einem das Muffenteil formschlüssig umgreifenden Haltering befestigt sind. Die Anordnung der Sicherungsfinger als gesondertes Bauteil erfordert zwar bei der Konfektionierung der Mupplungsmuffe einen zusätzlichen Arbeitsgang, da der Haltering und das Muffenteil zunächst zusammengesteckt werden müssen und anschließend die Sicherungshülse übergeschoben werden muß. Der besondere Vorteil dieser Bauform liegt jedoch darin, daß es hierdurch möglich wird, den elastischen Dichtungskörper in eine gegen die Einschubrichtung geöffnete napfartige Erweiterung im Muffenteil unmittelbar einzuvulkanisieren, da der Rand der Einschuböffnung freiliegt, so daß das Muffenteil und das Werkzeug relativ zueinander drehend bewegt werden können und das elastische Material eingebracht werden kann. Der besondere Vorteil liegt hier vor allem darin, daß durch das Einvulkanisieren des elastischen Dichtungskörpers die Verbindung zwischen Dichtungskörper und Muffenteil absolut dicht ist, so daß nur noch durch entsprechende Verpressung zwischen Dichtungskörper und eingeschobenem Rohrteil für die Abdichtung zwischen Muffenteil und Leitungsende Sorge zu tragen ist.

In zweckmäßiger Ausgestaltung der Erfindung ist ferner vorgesehen, daß der die Sicherungsfinger tragende Haltering geteilt ist. Der Haltering kann hier entweder aus zwei losen Teilstücken bestehen oder aber einstückig mit einer dünnen biegsamen Verbindung versehen sein, wie dies bei der Herstellung aus einem Kunststoff in Form eines sogenannten "Filmgelenkes" möglich ist. Der Haltering ist zweckmäßigerweise schalenförmig ausgebildet und umgreift einen entsprechend geformten Haltesteg am Muffenteil, so daß der Haltering mit den Sicherungsfingern formschlüssig und axial verschiebbar fest mit dem Muffenteil verbunden ist.

In bevorzugter Ausgestaltung der Erfindung ist ferner vorgesehen, daß die Sicherungsfinger zumindest im Bereich ihrer freien Enden anders gefärbt sind als die Sicherungshülse. Dies hat den Vorteil, daß in der vorstehend beschriebenen Montagestellung die Montagestellung durch die Farbgebung der Sicherungsfinger sichtbar ist, so daß auch eine optische Kontrolle möglich ist, ob nach dem Montieren die Sicherungshülse auch in die Betriebsstellung verschoben ist. Bei entsprechender Längenausbildung der Sicherungshülse überdeckt diese in der Betriebsstellung die Sicherungsfinger vollständig.

In Ausgestaltung der Erfindung ist vorgesehen, daß zumindest die Sicherungshülse aus Metall hergestellt und auf dem Muffenteil mit radialem Abstand geführt ist sowie in Betriebsstellung das Muffenteil einschließlich der Sicherungsfinger sowie einen Teil der mit dem Muffenteil verbundenen flexiblen Schlauchleitung überdeckt. Dies erlaubt es, auch bei aus Kunststoff hergestellten Steckmuffenteilen die Feuerwiderstandfähigkeit zu erhöhen, wie dies beispielsweise für Kraftstoffleitungen wünschenswert ist.

Die Erfindung wird anhand einer schematischen Zeichnung eines Ausführungsbeispieles näher erläutert.

Die gezeigte Ausführungsform weist einen mit einem Muffenteil 3 fest verbundenen elastischen Dichtungskörper 6 auf, der rohrförmig ausgebildet ist und der das eingeschobene Ende der Rohrleitung 1 auf der Außenseite über eine größere Länge dichtend umschließt. Der Muffenteil 3 mit seinem zapfenartigen Ansatz 4 zum Anschluß einer Schlauchleitung 2 bildet zusammen mit Sicherungsfingern 16 einen zylindrischen Aufnahmeraum für den rohrförmigen Dichtungskörper 6, wobei die Sicherungsfinger 16 in Montagestellung lose auf der Außenseite des Dichtungskörpers 6 aufliegen. Auf der Außenseite ist das Muffenteil 3 von einer axial verschiebbaren Sicherungshülse 19 umfaßt.

Die Sicherungsfinger 16 sind im Bereich ihrer freien Enden sowohl auf der Innenseite mit Ansätzen 26 als auch auf der Außenseite mit Vorsprüngen 27 versehen. Bei zurückgeschobener Sicherungshülse 19, also in der Montagestellung, kann die an ihrem Ende mit einem Wulst 28 versehene Rohrleitung 1 in den Dichtungskörper 6 eingedrückt werden, da die Sicherungsfinger 16 sich infolge ihrer Elastizität entsprechend nach außen biegen. Anschließend wird die Sicherungshülse 19 in die dargestellte Betriebsstellung vorgeschoben und zwar so weit, bis ein auf der Innenseite befindlicher ringförmiger Vorsprung 29 die ebenfalls einen Ring bildenden Vorsprünge 27 der Sicherungsfinger 16 rastend übergreift. Hierdurch werden die Sicherungsfinger 16 auf den Dichtungskörper 6 gepreßt, so daß durch diese Anpreßkraft die Dichtwirkung zwischen dem Dichtungskörper 6 und dem Rohrleitungsende erhöht wird. Zugleich ergibt sich hierdurch eine formschlüssige Sicherung der Rohrleitung 1 gegen ein Herausziehen, da der Wulst 28 wegen des hohen Verformungswiderstandes des Materials des unter Vorspannung stehenden Dichtungskörpers 6 nicht über die Ansätze 26 herausgezogen werden kann. Auch Querkräfte mindern nicht die Abdichtung.

Stellt man die Sicherungshülse 19 aus Metall her, bei sonst aus Kunststoff gefertigten Teilen, dann ergibt sich zusätzlich eine Erhöhung der Feuerwiderstandsfähigkeit der Kupplungsmuffe, da eine wärmeleitende Verbindung zwischen diesen Teilen auf wenige schmale Zonen beschränkt ist und der Zwischenraum 30 isolierend wirkt. Eine Erhöhung der Feuerwiderstandsfähigkeit auf beispielsweise drei Minuten kann bei der Verwendung im Kraftfahrzeugbau bei Unfällen lebensrettend sein.

Bei dem Ausführungsbeispiel sind die Sicherungsfinger 16 an das Muffenteil 3 einstückig angeformt. In Abwandlung ist es jedoch möglich, die Sicherungsfinger über einen ggf. axial geteilten Haltering als gesondertes Bauteil auszubilden. Nach dem Einsetzen des Dichtungskörpers wird der Haltering auf das Muffenteil aufgesetzt und anschließend die Sicherungshülse montiert.

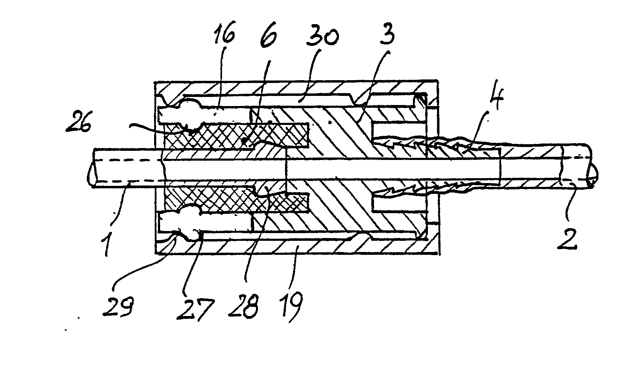

**Patentansprüche**

1. Kupplungsmuffe zum Verbinden der Enden zweier Leitungen für strömende Medien, insbesondere für Kraftstoffleitungen an Verbrennungsmotoren mit einem Muffenteil (3), das wenigstens eine Einschuböffnung zur Aufnahme eines Leitungsendes aufweist, dadurch **gekennzeichnet,**
daß am Muffenteil (3) im Bereich der Einschuböffnung (5) wenigstens zwei quer zur Einschubrichtung (8) auslenkbare Sicherungsfinger (16) angeordnet sind, deren freie Enden jeweils mit radial nach innen gerichteten Ansätzen (26) versehen sind, die auf die Außenwandung eines die Einschuböffnung bildenden rohrförmigen elastischen Dichtungskörpers (6) einwirken und daß eine auf dem Muffenteil (3) axial verschiebbare und auf diesem einrastbare Sicherungshülse (19) vorgesehen ist, die in ihrer Betriebsstellung die freien Enden der Sicherungsfinger (16) im wesentlichen spielfrei umgreift.

2. Kupplungsmuffe nach Anspruch 1, dadurch gekennzeichnet, daß an den Sicherungsfingern (16) im Bereich der am Dichtungskörper (6) anliegenden Ansätze (26) auf der Außenseite Vorsprünge (27) angeordnet sind, die im Zusammenwirken mit Vorsprüngen (29) der Sicherungshülse (19) eine die Betriebsstellung definierende Rast bilden.

3. Kupplungsmuffe nach Anspruch 1 oder 2, dadurch gekennzeichnet, daß die Sicherungsfinger (16) mit ihrem festen Ende an einem das Muffenteil (3) formschlüssig umgreifenden geteilten Haltering befestigt sind.

4. Kupplungsmuffe nach Anspruch 3, dadurch gekennzeichnet, daß der Haltering geteilt ist.

5. Kupplungsmuffen nach einem der Ansprüche 1 bis 4, dadurch gekennzeichnet, daß die Sicherungsfinger (16) zumindest im Bereich ihrer freien Enden anders gefärbt sind als die Sicherungshülse (19).

6. Kupplungsmuffe nach einem der Ansprüche 1 bis 5, dadurch gekennzeichnet, daß zumindest die Sicherungshülse (19) aus Metall hergestellt und auf dem Muffenteil (3) mit radialem Abstand geführt ist sowie in Betriebsstellung das Muffenteil (3) einschließlich der Sicherungsfinger (16) sowie einen Teil der mit dem Muffenteil (3) verbundenen flexiblen Schlauchleitung (2) überdeckt.

**Claims**

1. Coupling bushing for connecting the ends of two lines for fluid media, in particular for fuel lines on internal combustion engines, having a bushing part (3) which has at least one insertion opening for receiving a line end, characterised in that at least two securing fingers (16) which can be deflected transversely to the direction of insertion (8) are located on the bushing part (3) in the region of the insertion opening (5), the free ends of which fingers are each provided with shoulders (26) directed radially inward which act on the outer walls of a tubular elastic sealing member (6) forming the insertion opening, and that a securing sleeve (19) which is axially displaceable on the bushing part (3) and can be engaged thereon is provided which in its operating position surrounds the free ends of the securing fingers (16) substantially without play.

2. Coupling bushing according to Claim 1, characterised in that projections (27) are located on the outside on the securing fingers (16) in the region of the shoulders (26) bearing on the sealing member (6), which projections, in combination with projections (29) on the securing sleeve (19), form a catch defining the operating position.

3. Coupling bushing according to Claim 1 or 2, characterised in that the securing fingers (16) are attached by their fixed ends to a divided holding ring which surrounds the bushing part (3) positively.

4. Coupling bushing according to Claim 3, characterised in that the holding ring is divided.

5. Coupling bushings according to one of Claims 1 to 4, characterised in that the securing fingers (16), at least in the region of their free ends, are of a different colour from the securing sleeve (19).

6. Coupling bushing according to one of Claims 1 to 5, characterised in that at least the securing sleeve (19) is made of metal and is guided on the bushing part (3) at a radial distance therefrom, and also in the operating position covers the bushing part (3) including the securing fingers (16) and also part of the flexible hose (2) connected to the bushing part (3).

## Revendications

1. Manchon d'accouplement destiné à relier les extrémités de deux conduites pour milieux s'écoulant, en particulier de conduites de carburant sur des moteurs à combustion, comprenant un élément (3) de manchon, qui comporte au moins un orifice d'introduction pour recevoir une extrémité de conduite, **caractérisé** en ce que, sur l'élément (3) de manchon, dans la zone de l'orifice (5) d'introduction sont disposés au moins deux doigts de sûreté (16), pouvant s'écarter transversalement par rapport à la direction (8) d'introduction, dont les extrémités libres sont respectivement pourvues d'appendices (26) dirigés radialement vers l'intérieur qui agissent sur la paroi extérieure d'un corps d'étanchéité élastique tubulaire (6) constituant l'orifice d'introduction et en ce qu'il est prévu une douille de sûreté (19) qui peut glisser axialement sur l'élément (3) de manchon et s'y encliqueter et qui entoure sensiblement sans jeu les extrémités libres des doigts de sûreté (16) dans sa position de fonctionnement.

2. Manchon d'accouplement selon la revendication 1, caractérisé en ce que des saillies (27), qui constituent, en coopération avec des saillies (29) de la douille (19) de sûreté, un encliquetage définissant la position de fonctionnement sont disposées sur les doigts (16) de sûreté dans la zone des appendices (26) situés sur le corps d'étanchéité (6), du côté extérieur.

3. Manchon d'accouplement selon la revendication 1 ou 2, caractérisé en ce que les doigts de sûreté (16) sont solidaires par leur extrémité fixe d'une bague de maintien divisée, entourant avec engagement positif l'élément (3) de manchon.

4. Manchon d'accouplement selon la revendication 3, caractérisé en ce que la bague de maintien est divisée.

5. Manchon d'accouplement selon l'une des revendications 1 à 4, caractérisé en ce que les doigts de fixation (16) sont colorés, au moins dans la zone de leurs extrémités libres, d'une manière différente de la douille (19) de sûreté.

6. Manchon d'accouplement selon l'une des revendications 1 à 5, caractérisé en ce qu'au moins la douille de sûreté (19) est en métal et est guidée sur l'élément (3) de manchon à distance radiale et en ce qu'elle recouvre, dans la position de fonctionnement, l'élément (3) de manchon y compris les doigts (16) de sûreté ainsi qu'une partie de la conduite souple flexible (2) reliée à l'élément (3) de manchon.